# EUROPEAN PATENT APPLICATION

(11) **EP 1 669 837 A2**
(43) Date of publication of application: **14.06.2006**
(21) Application number: 05111516.0
(22) Date of filing: 30.11.2005
(51) Int. Cl.: G06F 1/00

(54) **Believably trustworthy enforcement of privacy enhancing technologies in data processing**

(30) Priority: 13.12.2004 US 10540
(71) Applicant: MICROSOFT CORPORATION, Redmond, Washington 98052-6399 (US)
(72) Inventor: Hohl, Adolf, 98052, Redmond (US); Zugenmaier, Alf, 98052, Redmond (US); Aura, Tuomas, 98052, Redmond (US); Erlingsson, Ulfar, 98052, Redmond (US)
(74) Representative: Grünecker, Kinkeldey, Stockmair & Schwanhäusser Anwaltssozietät

(57) **Abstract**

Systems and methods for trustworthy enforcement of privacy enhancing technologies within a data processing system enable data processing systems to communicate a believable statement that privacy is being protected in a trustworthy fashion. The invention includes providing for trustworthy enforcement of privacy enhancing technologies by establishing a standardized scheme for a privacy certification and routine inspection of data processing systems implementing privacy enhancing technologies. The regime of certification and inspection may be coupled with other technologies such as cryptography, tamper-evident computing, and runtime security enforcement.

## Description

### FIELD OF THE INVENTION

The invention generally relates to computer data processing and, specifically, to enforcing privacy enhancing technology in data processing.

### BACKGROUND OF THE INVENTION

Privacy enhancing technologies are used to provide data processing privacy by purporting to ensure that computer software and hardware are operating in accordance with a policy that ensures data privacy. Such technologies may include, for example, cryptography, tamper evident computing systems, or runtime security enforcement mechanisms. Implementing privacy enhancing technologies alone, however, may not build a trustworthy data processing system and may not ensure privacy. To build a trustworthy system, implementation of privacy enhancing technologies should be combined with guaranteed enforcement of the technologies. When privacy enhancing technologies are guaranteed to be enforced, a believable statement may be made regarding privacy protection. This statement may be believable because enforcement of the privacy enhancing technologies helps ensure that the technologies have not and will not be altered as a result of interaction with other entities or systems.

Maintaining privacy and ensuring privacy enhancing technologies and the systems they protect remain unadulterated may be a difficult task. In the data processing environment, information may be easily copied and disseminated. To protect privacy, not only current but also past and future forms of information should be controlled. The complexity of computer systems, however, makes it difficult to reason about their past and future behavior. Even if, at a given point in time, it can be established (such as by careful physical inspection and controlled configuration) that software with known good behavior―and only that software―is operational on a computer system, it can be impossible to guarantee whether it has been properly operational in the past and will continue to operate properly in the future. This problem may be compounded when data processing is performed on networked general-purpose computers. Not only do computers continuously create copies of information, potentially making it available to parties such as, for example, administrators and backup operators, but networked computers are also subject to malicious and inadvertent compromise, such as by worms, viruses or simple operator errors, any of which may breach privacy. It can be difficult to enforce privacy and therefore, it may be difficult to make a believable statement about the trustworthiness of privacy protection in a data processing system.

Therefore, there is a need for believably trustworthy protection of privacy in data processing systems, including trustworthy enforcement of privacy enhancing technologies implemented within such systems.

### SUMMARY OF THE INVENTION

This invention includes systems and methods for trustworthy enforcement of privacy enhancing technologies within a data processing system. The invention may enable data processing systems to communicate a believable statement that privacy is being protected in a trustworthy fashion. The invention may include providing for trustworthy enforcement of privacy enhancing technologies by establishing a standardized scheme for an initial privacy certification and subsequent routine inspection of data processing systems implementing privacy enhancing technologies. The regime of certification and inspection may be coupled with other technologies such as cryptography, tamper-evident computing, and runtime security enforcement.

The invention may enable data processing systems to make believably trustworthy statements to interested parties that privacy enhancing technologies are being implemented and enforced. The invention may enable end users of such systems to believe in the trustworthiness of the system and therefore, be willing to participate as users of the system. Through methods of the invention, the physical security properties and tamper-evidence of data processing systems may enable different entities to establish trust in the systems, even when physically distributed, for example, on a network or temporally distributed, for example, through a backup/restore cycle. When physical observation or verification is not feasible (e.g., as with physically distributed systems), the invention may allow the physical inspection or verification to be delegated to trusted certification or regulation agents.

### BRIEF DESCRIPTION OF THE DRAWINGS

The foregoing summary, as well as the following detailed description of illustrative embodiments, is better understood when read in conjunction with the appended drawings. For the purpose of illustrating the invention, there is shown in the drawings example constructions of the invention; however, the invention is not limited to the specific methods and instnunentalities disclosed. In the drawings:

FIG. 1 is a block diagram showing an example computing environment in which aspects of the invention may be implemented;

FIG. 2 is a block diagram of an example system for providing believably trustworthy enforcement of privacy enhancing technologies in data processing in accordance with the present invention;

FIG. 3 is a block diagram of an example intra-company system for providing believably trustworthy enforcement of privacy enhancing technologies in data processing in accordance with the present invention;

FIG. 4 is a block diagram of an example system for providing believably trustworthy enforcement of privacy enhancing technologies in data processing at a client and at a server in accordance with the present invention; and

FIG. 5 is a flow diagram of an exemplary method for providing believably trustworthy enforcement of privacy enhancing technology in data processing in accordance with the present invention.

### DETAILED DESCRIPTION OF ILLUSTRATIVE EMBODIMENTS

### Example Computing Environment

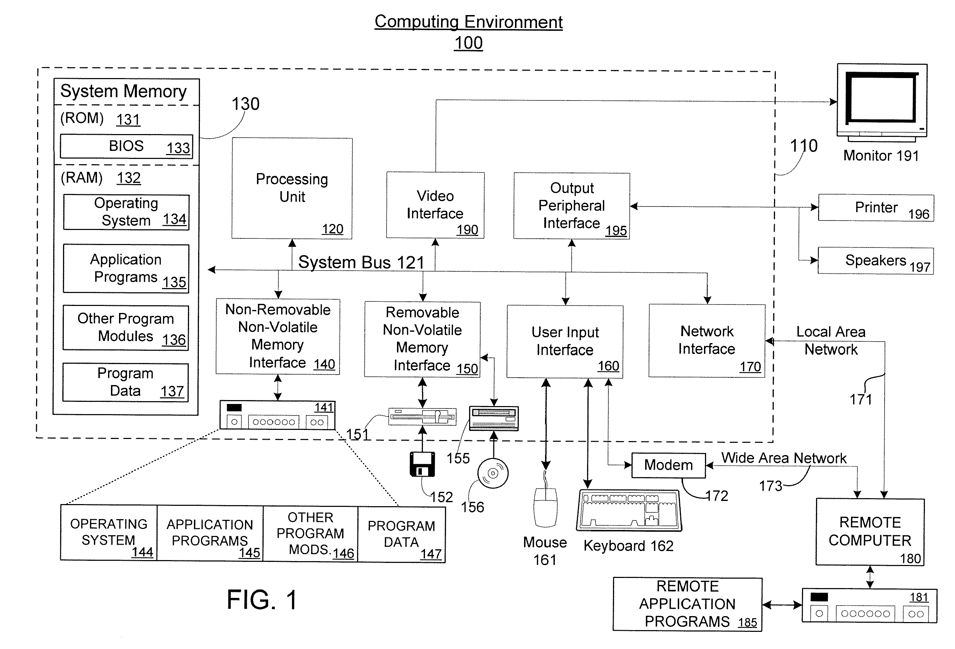

FIG. 1 and the following discussion are intended to provide a brief general description of a suitable computing environment in which an example embodiment of the invention may be implemented. It should be understood, however, that handheld, portable, and other computing devices of all kinds are contemplated for use in connection with the present invention. While a general purpose computer is described below, this is but one example. The present invention also may be operable on a thin client having network server interoperability and interaction. Thus, an example embodiment of the invention may be implemented in an environment of networked hosted services in which very little or minimal client resources are implicated, e.g., a networked environment in which the client device serves merely as a browser or interface to the World Wide Web.

Although not required, the invention can be implemented via an application programming interface (API), for use by a developer or tester, and/or included within the network browsing software which will be described in the general context of computer-executable instructions, such as program modules, being executed by one or more computers (e.g., client workstations, servers, or other devices). Generally, program modules include routines, programs, objects, components, data structures and the like that perform particular tasks or implement particular abstract data types. Typically, the functionality of the program modules may be combined or distributed as desired in various embodiments. Moreover, those skilled in the art will appreciate that the invention may be practiced with other computer system configurations. Other well known computing systems, environments, and/or configurations that may be suitable for use with the invention include, but are not limited to, personal computers (PCs), automated teller machines, server computers, hand-held or laptop devices, multi-processor systems, microprocessor-based systems, programmable consumer electronics, network PCs, minicomputers, mainframe computers, and the like. An embodiment of the invention may also be practiced in distributed computing environments where tasks are performed by remote processing devices that are linked through a communications network or other data transmission medium. In a distributed computing environment, program modules may be located in both local and remote computer storage media including memory storage devices.

FIG. 1 thus illustrates an example of a suitable computing system environment 100 in which the invention may be implemented, although as made clear above, the computing system environment 100 is only one example of a suitable computing environment and is not intended to suggest any limitation as to the scope of use or functionality of the invention.
Neither should the computing environment 100 be interpreted as having any dependency or requirement relating to any one or combination of components illustrated in the exemplary operating environment 100.

With reference to FIG. 1, an example system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and nonvolatile, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, random access memory (RAM), read-only memory (ROM), Electrically-Erasable Programmable Read-Only Memory (EEPROM), flash memory or other memory technology, compact disc read-only memory (CDROM), digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, radio frequency (RF), infrared, and other wireless media. Combinations of any of the above should also be included within the scope of computer readable media.

The system memory 130 includes computer storage media in the form of volatile and/or nonvolatile memory such as ROM 131 and RAM 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137. RAM 132 may contain other data and/or program modules.

The computer 110 may also include other removable/non-removable, volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156, such as a CD ROM or other optical media. Other removable/non-removable, volatile/nonvolatile computer storage media that can be used in the example operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1 provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port or a universal serial bus (USB).

A monitor 191 or other type of display device is also connected to the system bus 121 via an interface, such as a video interface 190. In addition to monitor 191, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a server, a router, a network PC, a peer device or other corrunon network node, and typically includes many or all of the elements described above relative to the computer 110, although only a memory storage device 181 has been illustrated in FIG. 1. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

One of ordinary skill in the art can appreciate that a computer 110 or other client devices can be deployed as part of a computer network. In this regard, the present invention pertains to any computer system having any number of memory or storage units, and any number of applications and processes occurring across any number of storage units or volumes. An embodiment of the present invention may apply to an environment with server computers and client computers deployed in a network environment, having remote or local storage. The present invention may also apply to a standalone computing device, having programming language functionality, interpretation and execution capabilities.

### Exemplary Embodiments

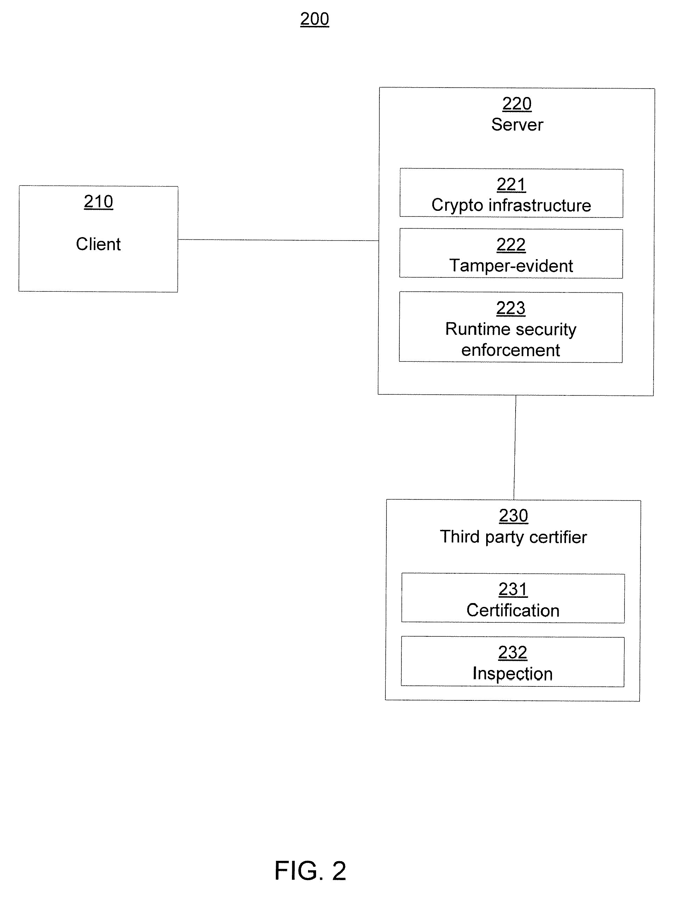

FIG. 2 is a block diagram of an example system 200 for providing believably trustworthy enforcement of privacy enhancing technologies in data processing. The system 200 may include a client 210, a server 220, and a third party certifier 230. The client 210 and the server 220 may be comprised of one or more computers that each may be the computer 110 described with regard to FIG. 1. The client 210 and the server 220 may be communicatively coupled via a network, which may be a local-area network (LAN) or a wide-area network (WAN) such as the Internet, for example. Alternatively, the client 210 may be in communication with the server 220 through a direct connection with or without being communicatively coupled to the server 220 via a network. The third party certifier 230 may be physically located in the vicinity of or otherwise observe the server 220.

The client 210 and the server 220 may process data and exchange data with each other. The system 200 may have any number of clients and servers. The server 220 may include privacy enhancing technology to ensure that software on the server 220 is secure and operates as expected. The technology may also ensure that server hardware is secure and may use a cryptographic key to ensure hardware integrity. Such privacy enhancing technology may include a cryptographic infrastructure 221, tamper-evident software and hardware 222, and runtime security enforcement 223, for example.

The cryptographic infrastructure 221 may be such infrastructure known to those skilled in the art and may enable interested parties to make cryptographically-protected statements, data, or certificates. The tamper-evident software and hardware 222 may enable the server's 220 software and hardware to be physically inspected to ensure that data processing systems have not been molested and continue to be trustworthy. Such tamper-evident software and hardware 222 may be known to those skilled in the art. The runtime security enforcement 223 may be a mechanism for hardware or software that provides, for example, secure boot and application launches, attestations, sealed storage, and protection against external influence such as modification of software code after boot or launch. Such runtime security enforcement 223 may be known to those skilled in the art.

More specific examples of privacy enhancing technologies may include:
encrypted main memory; trusted physical module (TPM) protection of secrets in hardware; hardware-root-of-trust that provides secure boot and hardware based enforcement of software integrity; hardware-root-of-trust paired with encryption to provide sealed storage; information rights management (IRM) or digital rights management (DRM) to provide a license-based protection of secrets and software-based enforcement of software integrity; and management and certification schemes for cryptographic keys to allow identification of hardware, software, licenses, users and roles, access control and other limitations on data use. The management and certification schemes may be based on secret sharing, Public-Key Infrastructures (PKIs), Key Distribution Centers (KDCs), or license and policy description languages. These are merely some examples of privacy enhancing technologies for ensuring the security of hardware and software, and there are other such technologies.

The third party certifier 230 may be responsible for ensuring and certifying that privacy enhancing technologies purported to be implemented on the server 220 are implemented on the server 220. The third party certifier 230 may, for example, verify that the software and the hardware on the server 220 are secure and function in an expected manner. Of course, a certifier such as the third party certifier 230 may verify privacy enhancing technologies implemented on client or other computers in addition to servers such as the server 220.

The third party certifier 230, more specifically, may perform certification 231 and inspection 232 functions. The third party certifier 230 may use cryptography to certify the server 220. The certification 231 function may include an initial verification that the privacy enhancing technologies (e.g., cryptographic infrastructure 221, tamper evident hardware and software 222, and runtime security enforcement 223) are being implemented on the server 220. The certification function may also include certifying to any interested parties (e.g., the client 210) that such technologies are being implemented. The third party certifier 230 or the server 220 may present to the client 210 or the user of the client 210 a believably trustworthy statement that the privacy enhancing technologies are being used and enforced on the server 220. This statement may be in the form of a certification. The certification may be a machine certificate or may be encrypted such that the client 210 may decode the certification and thus verify its authenticity. The client 210 also may include software, for example, to verify the authenticity of the certificate.

The certificate may include a listing of the privacy enhancing technologies being enforced and may include details regarding versions of the privacy enhancing technologies, installation dates, certification dates, and follow-up inspection dates. The certificate may also comprise, for example, verifiable hardware with a key or software signed with a key. The certificate may include a policy regarding conditions imposed on the use of data supplied by the client 210. That is, the certificate may detail how data supplied by the client 210 may be used, whether it will be destroyed after use, etc. Additionally, the certificate may provide other environmental information as well.

In addition to initially auditing the server 220, the third party certifier 230 also may be responsible for performing a subsequent inspection 232 function. The inspection 232 function may include periodic inspection of the server 220 to ensure, consistent with a standardized scheme, that any privacy enhancing technologies operating or purportedly operating on the server 220 are in fact operating properly. The inspection 232 function may include a physical inspection of the server 220, including its hardware and its software. Additionally, the inspection 232 function may include an operational test or inspection of the server 220, including the privacy enhancing technologies implemented on the server 220.

An example of the system 200 may be a system where end users on the client 210 are both a source of data sent to the server 220 and also a source of queries, the answers to which depend on data provided by the users. In such systems, the server 220 can provide a data processing service on data that the users themselves cannot perform. Additionally, such systems may include data processing servers 220 that use proprietary algorithms that cannot be made available to the end users on the client 210 (*e*.*g*., because they are trade secrets). Additionally, in the system 200, the client 210 may make it a requirement that any data that it sends to the server 220 be deleted once the client 210 has received the results of the data processing. The third party certifier 230, during the initial certification 231 function, may ensure that the server 220 is set-up to perform such deletion. Moreover, the inspection function 232 may provide an opportunity for the third party certifier 230 to periodically inspect the server 220 and verify that client data was used properly and was subsequently deleted.

The system 200 may additionally include, for example, systems for collaborative filtering (e.g., building of networks of how tastes and preferences correlate), systems for building trade knowledge, and other systems where clients such as the client 210 may provide sensitive information to a server 220 which, when accumulated, can provide insight into the user's preferences on topics not directly encapsulated in the data, such as additional things that a user might like. The system 200 may enable the user of the client 210 to have confidence in sharing private or otherwise sensitive data with the server 220 with the assurance that the data will be treated according to defined conditions.

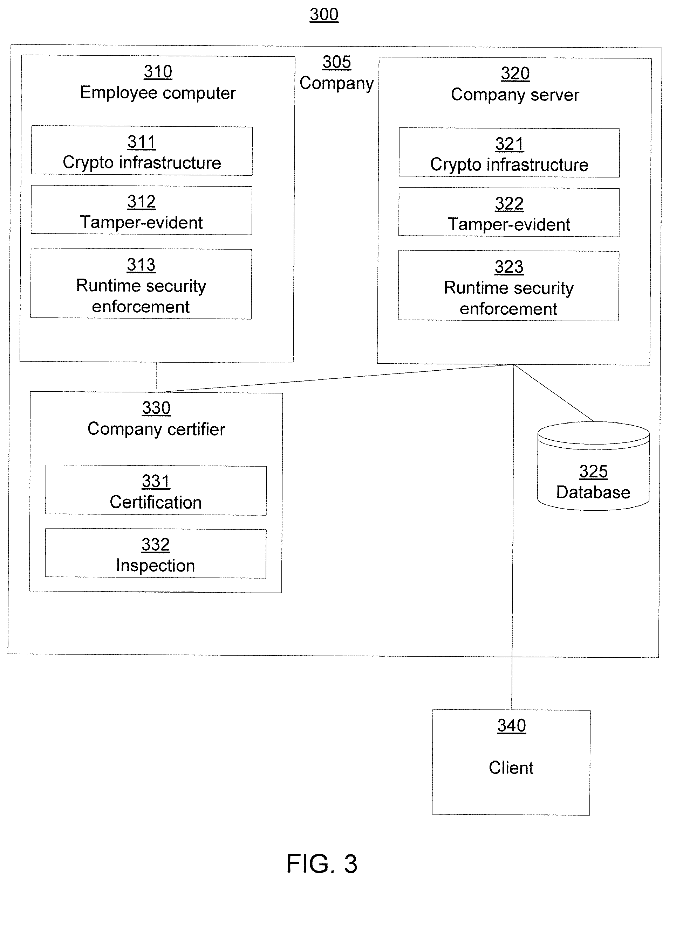

FIG. 3 is a block diagram of an example system 300 for providing believably trustworthy enforcement of privacy enhancing technologies in data processing within an example company 305 in accordance with one embodiment of the invention. The company 305 may include one or more employee computers 310, company servers 320, databases 325, and company certifiers 330. Clients 340 are also shown and interact with the company 305. The employee computer 310, the server 320, and the client 340 may be comprised of one or more computers that each may be the computer 110 described with regard to FIG. 1. The employee computer 310 and the server 320 may be directly or communicatively coupled. The client 340 and the server 320 may be communicatively coupled via a network, which may be a LAN or WAN, for example. The company certifier 330 may be physically located in the vicinity of the employee computer 310 and the server 320. The company certifier 330 may observe the employee computer 310 and the server 320.

The employee computer 310 and the server 320 may process data and exchange data with each other. Data may be stored on the database 325. The employee computer 310 and the server 320 may include privacy enhancing technologies as described with regard to FIG. 2, such as a cryptographic infrastructure 311, 321, tamper-evident software and hardware 312, 322, and runtime security enforcement 313, 323.

The client 340 may communicate information to the company 305 (through the server 320) that the user of the client 340 may consider private. The implementation of privacy enhancing technologies in combination with the enforcement of such technology through the company certifier 330 may provide the user of the client 340 with assurance that private data will remain private within the company 305 or may be disposed of in accordance with predefined conditions. For example, the company 305 may agree to delete private information from the data or to delete the data in its entirety upon completion of some task.

The company certifier 330 may perform certification 331 and inspection 332 functions as described above to ensure that privacy enhancing technologies are being implemented and provide information regarding the technologies to the client 340. In the system 300, the company certifier 330 may ensure that privacy enhancing technologies are being implemented on both the company server 320 and also on the employee computer 310. The company certifier 330 may then convey, either through the server 320 or otherwise, a believably trustworthy statement that the privacy enhancing technologies are being used and enforced within the company 305. The statement may include a listing of the privacy enhancing technologies being enforced, and may include details, described herein, regarding versions of the technologies, installation dates, certification dates, follow-up inspection dates, hardware and software keys, etc. The statement may be in the form of a certificate, which may be encrypted. The client 340 may decode the certificate to ensure the authenticity of the statement.

The company certifier 330 may provide a mechanism for managing customer data in such a way that privacy obligations are fulfilled. Use of the company certifier 330 may also enable the company 305 to provide all or parts of private data to necessary departments or business units in order to complete company business.

For example, the database 325 may include customer data that can be used by the company 305 for managing customer relations, including sales and marketing operations, market research, product support, and strategic planning. The company 305 may be required to limit uses of personally identifiable information to purposes for which it was intended at the time of data communication. The company 305 may also have explicit or implicit contracts with the user of the client 340 regarding the uses for the private data. An information rights management (IRM), a digital rights management (DRM), or other system may enable the company 305 and the company certifier 330 to enforce restrictions on uses of customer data internally in the company 305. The company 305 may use an IRM, a DRM, or other system to prevent, for example, the use a mailing list for purposes other than for printing address labels or for a mail-merge operation. The company 305 may protect the information in the mailing list by, for example, limiting the number of times the addresses in the mailing list can be used, and to enforce deletion of the data after use. The company certifier 330 may inspect the company server 320 and the employee computer 310 to ensure that the mailing list was used and deleted properly.

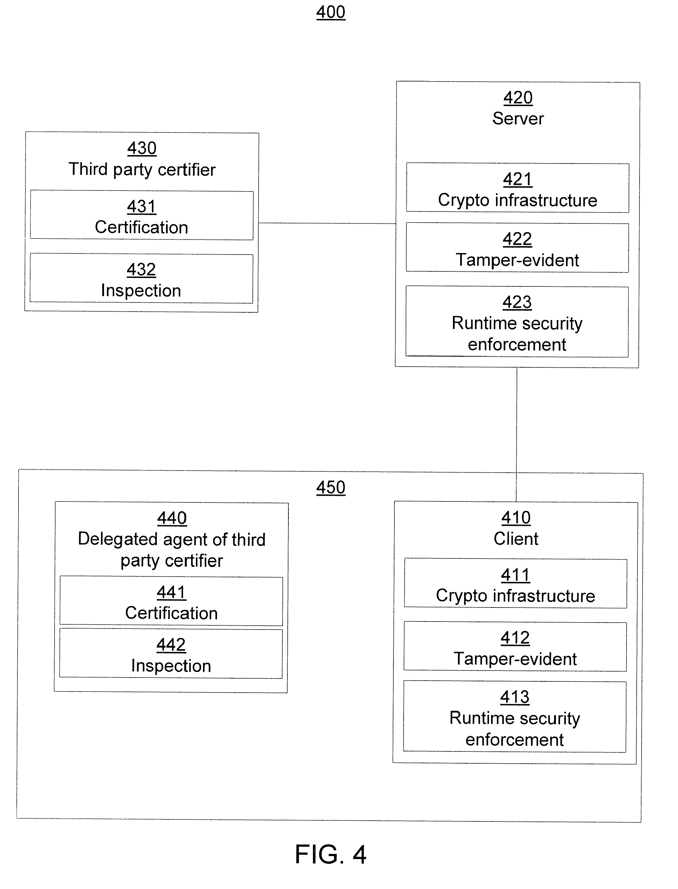

FIG. 4 is a block diagram of an example system 400 for providing believably trustworthy enforcement of privacy enhancing technologies in data processing at a remote location 450 from a server 420. The system 400 may include a server 420, a third party certifier 430, and a remote location 450. The remote location 450 may include a client 410 and a delegated agent 440 of the third party certifier 430. The client 410 and the server 420 may be comprised of one or more computers that each may be the computer 100 described with regard to FIG. 1. The client 410 and the server 420 may be communicatively coupled via a network. Alternatively, the client 410 may be in communication with a server (not shown) located at the remote location 450 which may be in communication with the server 420. The third party certifier 430 may be physically located in the vicinity of or otherwise observe the server 420. The delegated agent 440 of the third party certifier 430 may be physically located at the remote location 450 or otherwise observe the client 410.

The client 410 and the server 420 may process data and exchange data with each other. The system 400 may include any number of clients and servers. The server 420 and the client 410 may include privacy enhancing technologies as described above for ensuring that hardware and software are secure. Such technologies may include a cryptographic infrastructure 421, 411, tamper-evident software and hardware 422, 412 and a runtime security enforcement 423, 413 as described herein, for example.

The third party certifier 430 may provide certification 431 and inspection 432 functions as described herein to ensure and convey that the privacy enhancing technologies are being implemented on the server 420. Additionally, the delegated agent 440 may provide similar functions 441, 442 to ensure that such technologies are being implemented on the client 410. In this way, the server 420 and the client 410 may exchange data with a believable assurance that the privacy enhancing technologies are being implemented and enforced by each other.

The delegated agent 440 of the third party certifier 430 may have a relationship wherein the delegated agent 440 coordinates its certification 441 and inspection 442 functions with the third party certifier 430 such that the third party certifier 430 or the user of the server 420 may be confident that the delegated agent 440 is trusted. In an alternative embodiment, there may be no relationship between the delegated agent 440 and the third party certifier 430. Instead, the delegated agent 440 may be another third party certifier with credentials or that otherwise establishes itself as trusted to the client 440 or the server 420.

An example of the system 400 may include a public library as the remote location 450 having the client 410. The client 410 may be a publicly accessible computer for users to check, for example, their e-mail. The server 420 may be an e-mail server. The server 420 and the user may have an interest in ensuring that the remote location 450 (e.g., the public library) is implementing and enforcing privacy enhancing technologies to ensure that the user's data is not compromised and that e-mail or other private data is deleted from the client 410 after each session. The e-mail server 420 may desire the remote location 450 to include a delegated agent 440 of the third party certifier 430 to perform certification 441 and inspection 442 functions as described herein. Alternatively, the e-mail server 420 may desire the remote location to have its own third party certifier similar to the third party certifier 430 to certify implementation of privacy enhancing technologies operating on the client 410.

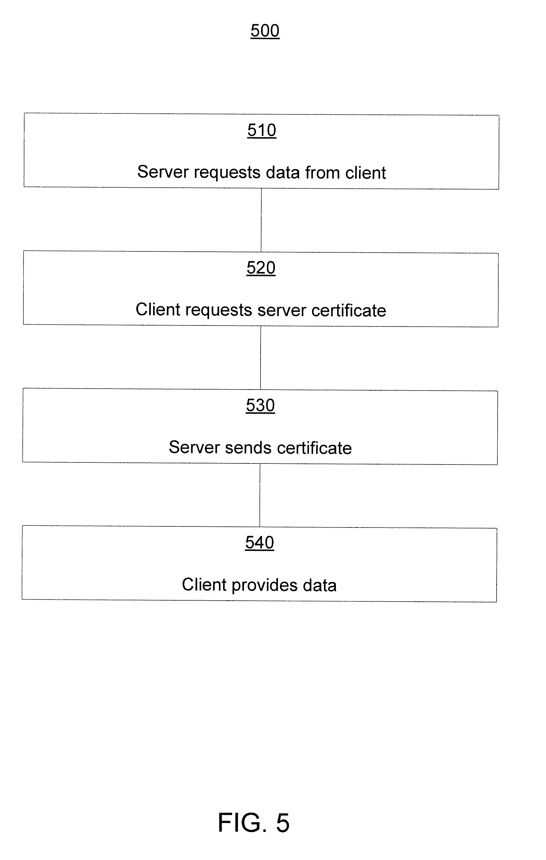

FIG. 5 is a flow diagram of an example method 500 for providing believably trustworthy enforcement of privacy enhancing technology in data processing. At step 510, a server may request data from a client. Upon receipt of the request from the server, at step 520, the client may request a certificate from the server regarding the implementation and enforcement of privacy enhancing technologies. The client may refuse to send the requested data to the server without such a certificate. At step 530, the server may send a machine certificate, encrypted certificate, or other certificate to the client. The certificate may be provided by a third party certifier, a company certifier, a delegated agent of a third party certifier, or other entity charged with auditing and ensuring that the server is implementing privacy enhancing technologies.

The certificate may refer to, for example, verifiable hardware with a key or software signed with a key. The certificate may also include a policy regarding how the data supplied by the client may be used and whether it will be destroyed after use. Additionally, the certificate may provide environmental information as well. The client may review the certificate and other representations from the server, conclude that the server is implementing and enforcing privacy enhancing technologies, and provide the requested data to the server at step 540.

Of course, the method 500 is just one example for providing believably trustworthy enforcement of privacy enhancing technology. In alternative embodiments consistent with the invention, a client may request data from a server, in which case the client may provide a certificate to the server, such as in the case of the system 400 described with regard to FIG. 4.

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. One or more programs that may utilize the creation and/or implementation of domain-specific programming models aspects of the present invention, e.g., through the use of a data processing API or the like, are preferably implemented in a high level procedural or object oriented programming language to communicate with a computer system. However, the program(s) can be implemented in assembly or machine language, if desired. In any case, the language may be a compiled or interpreted language, and combined with hardware implementations.

While the present invention has been described in connection with the specific examples in conjunction with the various figures, it is to be understood that other embodiments may be used or modifications and additions may be made to the described embodiments for performing the same function of the present invention without deviating therefrom. The examples are offered in explanation of the invention and are in no way intended to limit the scope of the invention as defined in the claims. For example, the company certifier 330 described with regard to FIG. 3 may certify both the employee computer 310 and the server 320, or may certify only the employee computer 310. Also for example, the third party certifier 230 described with regard to FIG. 2 may alternatively be a company certifier similar to that described with regard to FIG. 3. Additionally, the system 400 may not have the certifier 430, for example. In summary, in no way is the present invention limited to the examples provided and described herein. Therefore, the present invention should not be limited to any single embodiment, but rather should be construed in breadth and scope in accordance with the appended claims.

## Claims

1. A system, comprising:
a first computer that is in communication with a second computer, wherein the first computer comprises a privacy enhancing technology; and
a certifier for ensuring that the privacy enhancing technology is being implemented on the first computer, wherein a certification is communicated to the second computer regarding the implementation of the privacy enhancing technology on the first computer.

2. The system of claim 1, wherein the first computer comprises hardware and wherein the privacy enhancing technology provides security for the hardware.

3. The system of claim 1, wherein the first computer comprises software and wherein the privacy enhancing technology provides security for the software.

4. The system of claim 1, wherein the privacy enhancing technology provides cryptographically-protected data.

5. The system of claim 1, wherein the privacy enhancing technology provides tamper-evident software.

6. The system of claim 1, wherein the privacy enhancing technology provides tamper-evident hardware.

7. The system of claim 1, wherein the privacy enhancing technology provides runtime security enforcement.

8. The system of claim 1, wherein the certifier communicates the certification to the second computer.

9. The system of claim 1, wherein the certifier is a third-party certifier.

10. The system of claim 1, wherein the certifier is local to one of the first computer and the second computer.

11. The system of claim 1, wherein the first computer is a server and the second computer is a client of the first computer.

12. The system of claim 1, wherein the second computer is a server and the first computer is a client of the second computer.

13. A system, comprising:
first privacy enhancing technology by providing cryptographically-protected data;
second privacy enhancing technology by providing secure software;
third privacy enhancing technology by providing secure hardware; and
a certifier for ensuring that the first, second, and third privacy enhancing technologies are being implemented on the system.

14. The system of claim 13, wherein the certifier provides a certification regarding the implementation of the first, second, and third privacy enhancing technologies to a computer in communication with the system.

15. The system of claim 13, wherein at least one of the first, second, and third privacy enhancing technologies provides runtime security enforcement.

16. A method comprising:
verifying that software on a computer comprises privacy enhancing technology;
verifying that hardware on the computer comprises privacy enhancing technology; and
sending a certification indicating that the hardware and software on the computer comprises privacy enhancing technology.

17. The method of claim 16, wherein the certification is encrypted.

18. The method of claim 16, wherein sending the certification comprises sending the certification to a client of the computer.

19. The method of claim 16, wherein sending the certification comprises sending the certification from a client of the computer to the computer.

20. The method of claim 16, wherein the computer comprises cryptographically-protected data.

21. The method of claim 16, wherein the computer comprises tamper-evident software.

22. The method of claim 16, wherein the computer comprises tamper-evident hardware.

23. The method of claim 16, wherein the computer comprises runtime security enforcement.

24. The method of claim 16, further comprising providing the certification from a third-party certifier.

25. The method of claim 16, further comprising receiving data at the computer, wherein the certification comprises a condition regarding a use of the data.

26. The method of claim 25, wherein the condition is deletion of the data.

27. The method of claim 25, further comprising verifying compliance with the condition.

28. A computer-readable medium having computer-executable instructions for performing steps, comprising:
verifying that software on a computer comprises privacy enhancing technology;
verifying that hardware on the computer comprises privacy enhancing technology; and
preparing a certification indicating that the hardware and software on the computer comprises privacy enhancing technology.

29. The computer-readable medium of claim 28, having further computer-executable instructions for performing the step of sending the certification to a second computer.

30. A method, comprising:
sending a request from a first computer for a certification regarding implementation of a privacy enhancing technology on a second computer; and
receiving the certification at the first computer.

31. The method of claim 30, further comprising verifying at the first computer the authenticity of the certification.

32. The method of claim 30, further comprising:
establishing a condition regarding use of data located on the first computer; and
sending the data from the first computer to the second computer.

33. The method of claim 32, wherein the condition comprises deletion of the data.

34. The method of claim 32, wherein the condition requires private information included in the data to remain private.

35. The method of claim 30, wherein the first computer is a server and the second computer is a client of the first computer.

36. The method of claim 30, wherein the second computer is a server and the first computer is a client of the second computer.
